# EUROPEAN PATENT APPLICATION

(11) **EP 4 800 985 A1**
(43) Date of publication of application: **02.09.2026**
(21) Application number: 25160626.5
(22) Date of filing: 27.02.2025
(51) Int. Cl.: H04L 12/40

(54) **CONTROLLER AREA NETWORK (CAN) DEVICE, CAN SYSTEM, AND METHOD FOR THE CAN DEVICE**

(71) Applicant: NXP B.V., 5656 AG Eindhoven (NL)
(72) Inventor: Walrant, Thierry G. C., 5656 AG Eindhoven (NL); Elend, Bernd Uwe Gerhard, 5656 AG Eindhoven (NL)
(74) Representative: Schmütz, Christian Klaus Johannes

(57) **Abstract**

The present invention relates to a Controller Area Network, CAN, device comprising: a data, RD, interface, a processing unit, and a bus interface for coupling to a CAN bus, wherein the CAN device is configured to receive first data via the RD interface, wherein the processing unit is configured to create a series of CAN frames referred to as a frame series based on the first data such that the frame series comprises a start CAN frame and at least one further CAN frame referred to as at least one follower CAN frame, wherein the processing unit is configured to distribute the first data among the CAN frames of the frame series, wherein the processing unit is configured to create the start CAN frame such that the start CAN frame comprises an identifier that represents a priority value referred to as the start priority value within a predefined first value range, wherein the processing unit is configured to create each follower CAN frame such that each follower CAN frame comprises a respectively associated identifier that represents a priority value referred to as a follower priority value within a predefined second value range, wherein the second value range is less than the first value range, and wherein the CAN device is configured to transmit the CAN frames of the frame series via the CAN interface such that the at least one follower CAN frame follows the start CAN frame.

## Description

### TECHNICAL FIELD

The present disclosure relates to a Controller Area Network (CAN) device, a CAN system, and a method for the CAN device.

### BACKGROUND

A Controller Area Network (CAN) can be used for communications within vehicles, in particular within automobiles. It will be appreciated that CAN also has application outside of the field of automobiles. A CAN system may include multiple CAN nodes, wherein each CAN node may be a part of a device like an electronic control unit (ECU), an engine control module (ECM), a power train control module (PCM), an airbag, an antilock brake, cruise control, electric power steering, audio systems, windows, doors, mirror adjustment, battery and recharging systems for hybrid/electric cars, and many more. Several CAN nodes may be connected to a joint CAN bus, such that the CAN nodes can communicate among each other over the CAN bus using a CAN protocol. The CAN protocol is used to enable communications between the various CAN nodes. The data link layer of the CAN protocol is standardized as International Standards Organization (ISO) 11898-1:2003. CAN Flexible Data-Rate or "CAN FD" is an extension of the standardized CAN data link layer protocol and is integrated into the ISO11898-1:2015 standard. CAN FD may provide higher data rates. The standardized CAN data link layer protocol is being further extended to provide even higher data rates. A further extension, referred to as CAN XL, with an optional level scheme on the physical layer allowing even higher data rates, is in the definition phase discussed under CiA610 (CAN in Automation) and is moving towards standardization in the form of ISO11898-1:202x.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

Aspects of the present disclosure are given in the accompanying claims.

In accordance with a first aspect of the present disclosure, a Controller Area Network, CAN, device is provided, wherein the CAN device comprising a data, RD, interface, a processing unit, and a bus interface for coupling to a CAN bus, wherein the CAN device is configured to receive first data via the RD interface, wherein the processing unit is configured to create a series of CAN frames referred to as a frame series based on the first data such that the frame series comprises a start CAN frame and at least one further CAN frame referred to as at least one follower CAN frame, wherein the processing unit is configured to distribute the first data among the CAN frames of the frame series, wherein the processing unit is configured to create the start CAN frame such that the start CAN frame comprises an identifier that represents a priority value referred to as the start priority value within a predefined first value range, wherein the processing unit is configured to create each follower CAN frame such that each follower CAN frame comprises a respectively associated identifier that represents a priority value referred to as a follower priority value within a predefined second value range, wherein the second value range is less than the first value range, and wherein the CAN device is configured to transmit the CAN frames of the frame series via the CAN interface such that the at least one follower CAN frame follows the start CAN frame.

In one or more embodiments, the CAN device is configured to use the second value range for follower priority values only.

In one or more embodiments, the amount of data of the first data is greater than a maximum amount of payload data of a single CAN frame.

In one or more embodiments, the processing unit is configured to distribute the first data among the payload fields of the CAN frames of the frame series.

In one or more embodiments, the processing unit is configured to determine the number of follower CAN frames of the frame series based on the first data.

In one or more embodiments, the processing unit is configured to create each follower CAN frame of the frame series such that the identifier of each follower CAN frame represents the same follower priority value.

In one or more embodiments, the CAN device is configured to receive second data, wherein the processing unit is configured to create a second CAN frame based on the second data such that the second data is entirely represented by the second CAN frame and such that the second CAN frame comprises an identifier representing a priority value within a predefined third value range, and wherein the third value range is greater than the second value range.

In one or more embodiments, the third value range is less than the first value range.

In one or more embodiments, the CAN device is configured to receive third data, wherein the processing unit is configured to create a third CAN frame based on the third data such that the third data is entirely represented by the third CAN frame and such that the third CAN frame comprises an identifier representing a priority value within a predefined fourth value range, and wherein the fourth value range is greater than the first value range.

In one or more embodiments, the CAN device comprises a CAN controller and a CAN transceiver, wherein the bus interface is formed by the CAN transceiver.

In one or more embodiments, the CAN controller is formed by the processing unit.

In one or more embodiments, the CAN device comprises a data adaptation unit formed by the processing unit, wherein the data adaptation unit is coupled to the CAN controller, and wherein the data adaptation unit is configured to distribute received data among a plurality of CAN frames and/or to adapt identifier of CAN frames based on received data.

In accordance with a second aspect of the present disclosure, a CAN system is provided, wherein the CAN system comprising a CAN bus and a plurality of CAN devices according to the first aspect and/or any of the mentioned embodiments, the preceding claims, wherein each CAN device is coupled to the CAN bus.

In accordance with a third aspect of the present disclosure, a method for the CAN device is provided, the method comprising the steps of: (a) receiving first data via the RD interface; (b) the processing unit creating a series of CAN frames referred to as a frame series based on the first data via the processing unit, such that the frame series comprises a start CAN frame and at least one further CAN frame referred to as a follower CAN frame, wherein the start CAN frame comprises an identifier that represents a priority value referred to as the start priority value within a first predefined value range, and wherein each follower CAN frame comprises a respectively associated identifier that represents a priority value referred to as a follower priority value within a second predefined value range, and wherein the second value range is less than the first value range; wherein the processing unit distributes the first data among the CAN frames of the frame series, and (c) the CAN device transmitting the CAN frames of the frame series via the CAN interface such that the at least one follower CAN frame follows the start CAN frame.

In one or more embodiments, the method also comprising the following steps: (d) receiving second data via the RD interface, and (e) the processing unit creating a second CAN frame based on the second data such that the second data is entirely represented by the second CAN frame and such that the second CAN frame comprises an identifier representing a priority value of a predefined third value range, and wherein the third value range is greater than the second value range.

### DESCRIPTION OF DRAWINGS

Embodiments of the present disclosure will be described in more detail with reference to the appended drawings. It is to be noted, however, that the appended drawings illustrate only typical embodiments of the present disclosure and are therefore not to be considered limiting of its scope, such that other equally effective embodiments may be implemented. Advantages of the subject matter claimed will become apparent to those skilled in the art upon reading this description in conjunction with the accompanying drawings, in which like reference numerals have been used to designate like elements, and in which:
Figure 1 shows a simplified block diagram of a CAN system.
Figure 2 shows a simplified block diagram of a CAN node.
Figure 3 shows a simplified CAN frame.
Figure 4 shows a simplified distribution scheme.
Figure 5 shows a simplified allocation scheme.
Figure 6 shows a simplified time chart.
Figure 7 shows a simplified flow chart.

### DESCRIPTION OF EMBODIMENTS

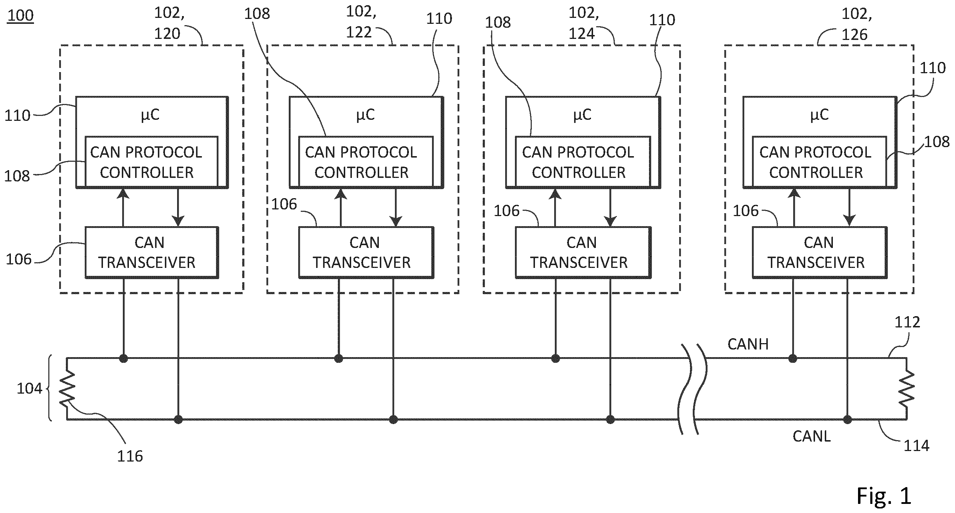

Figure 1 schematically illustrates an example of a Controller Area Network, CAN, system 100. The CAN system 100 may comprise a plurality of CAN nodes 102, in particular four CAN nodes 102. The four CAN nodes 102 may be referred to, in order, as first CAN node 120, second CAN node 122, third CAN node 124, and fourth CAN node 126.

The CAN system 100 may also comprise a CAN bus 104. The CAN bus 104 may comprise a first line 112 and a second line 114. The first line 112 may also be referred to as the first CAN bus line or the CANH line. The second line 114 may also be referred to as the second CAN bus line or the CANL line. The two lines 112, 114 may be parallel. A termination impedance 116 may be coupled between the two lines 112, 114 at each end of the parallel lines 112, 114. Furthermore, each CAN node 102 may be coupled to the CAN bus 104, in particular so that the CAN nodes 102 are coupled to one another in parallel via the CAN bus 104.

If reference is made to CAN node 102 in the following, features, advantages and/or effects mentioned in this context may apply in an analogous manner to each of CAN nodes 120-126.

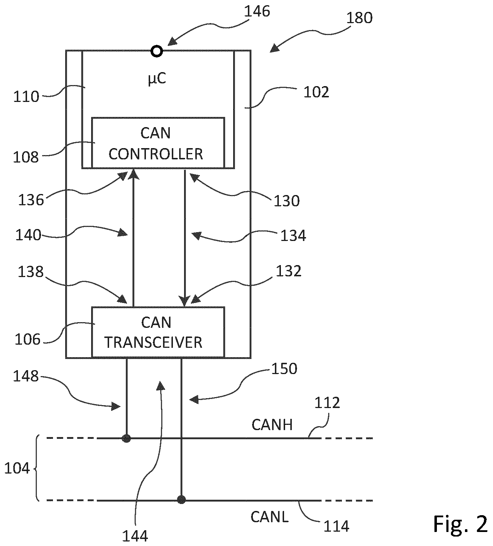

Figure 2 is a schematic diagram of an example of a CAN node 102. The CAN node 102 may comprise a CAN transceiver 106 and a processing unit 110. The processing unit 110 may be configured as a microcontroller 110. The processing unit 110 may also be referred to as a host or a host processor. The CAN node 102 may also comprise a CAN controller 108. The CAN controller 108 may be formed and/or embedded by the processing unit 110. As an effect, the CAN controller 108 may be an integral part of the processing unit 110.

The CAN node 102 and/or the processing unit 110 may comprise an interface 146. The interface 146 may be configured to receive data for the CAN node 102 and/or for the processing unit 110. The interface 146 may be referred to as a data interface 146 or an RD interface 146. The term "RD" may be an abbreviation of the term "data". In one example, the data interface 146 is formed by the processing unit 110. The data interface 146 of the processing unit 110 may simultaneously be a corresponding data interface 146 of the CAN node 102. In another example, the data interface 146 may be formed by the CAN node 102, wherein the data interface 146 may be coupled to the processing unit 110 to forward data from the data interface 146 to the processing unit 110.

The CAN controller 108 may comprise an interface 130, which is also referred to as a first transmit data interface 130 or a first TXD interface 130. The CAN transceiver 106 may comprise an interface 132, also referred to as a second transmit data interface 132 or a second TXD interface 132. The first TXD interface 130 may be coupled to the second TXD interface 132 via a signal connection 134, which is also referred to as the first signal connection 134.

The CAN controller 108 may comprise a further interface 136, which is also referred to as a first receive data interface 136 or as a first RXD interface 136. The CAN transceiver 106 may comprise a further interface 138, which is also referred to as a second receive data interface 138 or as a second RXD interface 138. The second RXD interface 138 may be coupled to the first RXD interface 136 via a further signal connection 140, which is also referred to as a second signal connection 140.

The CAN transceiver 106 may comprise a further interface 144. The interface 144 may also be referred to as a CAN bus interface or as a bus interface. The CAN bus interface 144 may be configured to couple the CAN transceiver 106 to the CAN bus 104. The bus interface 144 may be coupled to the first CAN bus line 112 via a third signal connection 148. The bus interface 144 may be coupled to the second CAN bus line 114 via a fourth signal connection 150.

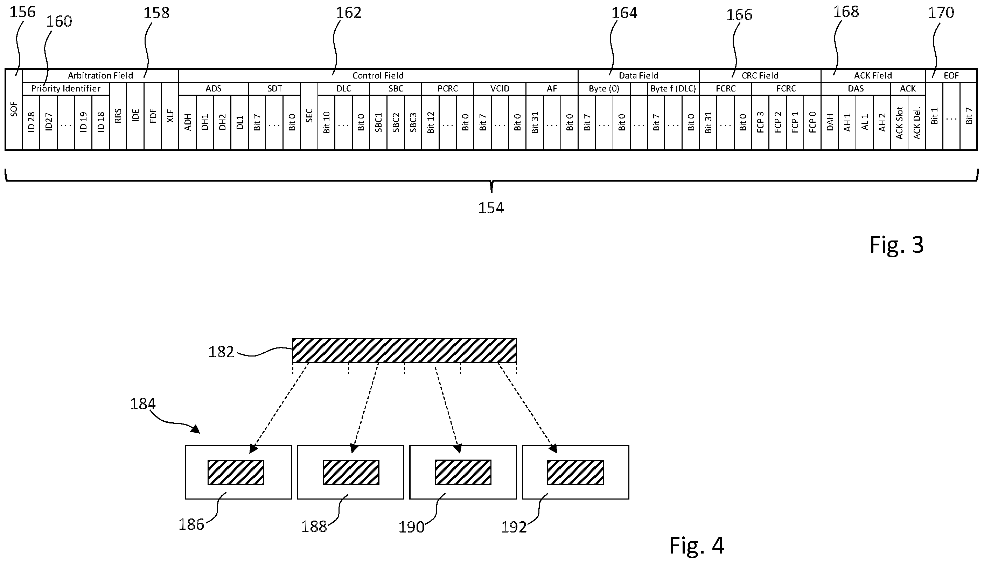

Figure 3 schematically shows an example of a CAN frame 154. The CAN frame 154 from Figure 3 may, for example, be configured as a CAN frame according to the CAN XL protocol. However, the CAN frame may alternatively be configured according to the CAN FD protocol. The CAN 154 frame may comprise a start-of-frame, SOF, field 156, an arbitration field 158, a control field 162, a data field 164, a cycle redundancy check, CRC, field 166, an acknowledgement, ACK, field 168, and an end-of-frame, EOF, field 170. The arbitration field 158 may comprise of an identifier 160, also referred to as a CAN identifier, which comprises a series of bits, also referred to as ID bits. The identifier 160 represents a value. The smaller the value represented by the identifier 160, the higher the priority of the CAN frame 154 that comprises the respective identifier 160.

The present disclosure also relates to a CAN device 180. The CAN device 180 comprises the processing unit 110 and, as a first interface, the RD interface 146. In a first embodiment of the CAN device 180, the CAN device 180 comprises, as a further second interface, the TXD interface 130 of the CAN controller 108. In a second embodiment of the CAN device 180, the CAN device 180 comprises the CAN BUS interface 144 as the second interface. The following explanations, preferred features, technical effects and/or advantages may be related to the first embodiment of the CAN device 180, to the second embodiment of the CAN device 180, or to both the first and second embodiments of the CAN device 180.

The CAN device 180 is configured to receive data referred to as first data 182 via the RD interface 146. An example of the first data 182 is schematically illustrated in Figure 4. The first data 182 may be sensor data, control data, or any other data. In an example, the data is not formatted according to a CAN protocol and/or not formatted according to a CAN frame. The CAN device 180 may be configured to receive and/or read the first data 182 via the RD interface 146 from a data memory, in particular a data buffer. In an example, the RD interface 146 may be configured to be coupled to the data memory. In another example, the first data 182 may be transmitted from another data source to the RD interface 146.

In an example, the first data 182 may be configured as contiguous data, so that the data serves a common purpose and/or represents a common event, for example. The context of the data may also have a different cause.

A maximum amount of payload data of a single CAN frame 154 may be predefined by the number of bits of the data field 164. The data field 164 may also be referred to as the payload data field. The maximum amount of payload data of the single CAN frame 154 may be predefined according to the pre-selected CAN protocol. The maximum amount of payload data of the single CAN frame 154 according to the classic CAN protocol may be smaller than the maximum amount of payload data of a (different) single CAN frame 154 according to the CAN protocol, in particular according to the CAN XL protocol.

In an example, a data amount of the first data 182 is more than a maximum amount of payload data of a single CAN frame 154. As an effect, not all of the first data 182 can be included in a (single) data field 164 of a single CAN frame 154 in this example. Instead, the first data 182 may be distributed across the data fields 164 of several individual CAN frames 154 via the processing unit 110. By splitting the first data 182 into several data fields 164 of several CAN frames 154, it is possible that the said several CAN frames 154 are not transmitted in an uninterrupted series of CAN frames 154 over the CAN bus 104, but that a further CAN frame 154, which has a high priority and does not belong to the aforementioned series of CAN frames 154, is transmitted over the CAN bus 104 and thereby temporarily interrupts the series of CAN frames 154 during transmission over the CAN bus 104.

It was explained earlier that the first data 182 may be configured as contiguous data, which, for example, was created in connection with (and/or resulting from) common event. The first data 182 may therefore be useful for receiver CAN node 102 if the first data 182 is completely received (in an uninterrupted manner) by the receiver CAN node 102. If the series of CAN frames 154 is interrupted, as explained in an example above, the complete reception of the first data 182 is delayed at the receiver CAN node 102. If the first data 182 has been created in response to an important event, then the delay in the complete receipt of the first data 182 at the receiver CAN node 102 may be disadvantageous. It may therefore be desirable to split the first data 182 across the data fields 164 of a series of CAN frames 154, wherein it should be ensured that the series of CAN frames 154 can be transmitted via the CAN bus 104 in a corresponding, uninterrupted series.

The processing unit 110 of the CAN device 180 is configured to create a series of CAN frames 154, referred to as a frame series 184, based on the payload data 182 such that the frame series 184 comprises a CAN frame 154 referred to as a start CAN frame 186 and at least one further CAN frame 154 referred to as a follower CAN frame 188-192. Furthermore, the processing unit 110 is configured to distribute the first data 182 to the CAN frames 186, 188-192 of the frame series 184.

Figure 4 schematically shows an example of how the first data 182 is distributed among the start CAN frame 186 and the at least one follower CAN frame 188-192. In an example, the first data 182 may be divided, in particular equally divided, among the start CAN frame 186 and the at least one follower CAN frame 188-192 without loss of data and/or without duplication of data. In an example, the processing unit 110 may be configured to fragment the first data 182 into a plurality of data parts and to assign each data part exclusively to one of the CAN frames 186, 188-192. In an example, the first data 182 may be fragmented by the processing unit 110 of the CAN device 180 such that each of the CAN frames 186, 188-192 receives the same share of the first data 182. The respective share of the first data 182 may be written by the processing unit 110 into the data field 164 of the respective CAN frame 186, 188-192. As an effect, the processing unit 110 may distribute the first data 182 to the data fields 164 of the CAN frames 186, 188-192 of the first frame series 184.

In an example, the processing unit 110 may be configured to determine the number of follower CAN frames 188-192 of the first frame series 184 based on an amount of data of the first data 182. It was explained earlier that the maximum amount of data may be predefined that can be comprised and/or embedded by each CAN frame 186, 188-192 of the first frame series 184 in the respective data field 164. This maximum amount of data may also be referred to as the frame data amount. Based on the predefined frame data amount, the number of CAN frames 186, 188-192 of the first frame series 184 may be determined in an example by the processing unit 110, in particular so that the maximum possible use of the total data amount available through the CAN frames 186, 188-192 is ensured. This may support an efficient use of the bandwidth of the CAN bus 104.

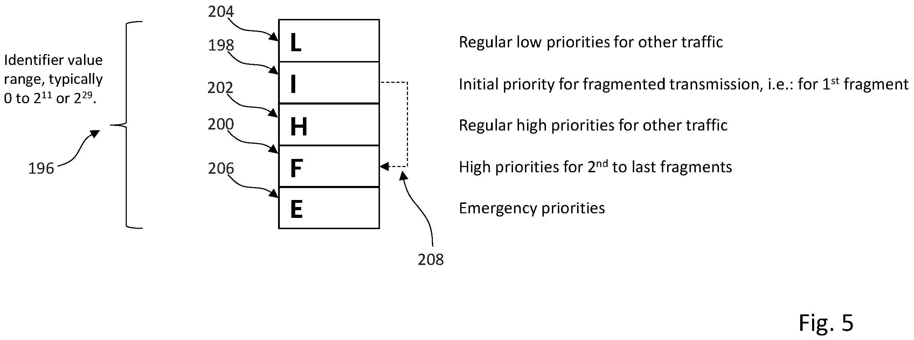

Figure 5 shows an example of a distribution scheme for distributing the total value range 196 for CAN identifier 160. The total value range 196 represents schematically all theoretically possible values that may be represented by a CAN identifier 160. If a CAN frame 154 is configured in accordance with the Classical CAN protocol, in particular the base identifier (first 11 bits) of the CAN identifier 160 of the CAN frame 154 may represent a value between 0 (zero) and 2047. The smaller the value represented by a CAN identifier 160, the higher the priority of the CAN frame 154 comprising the respective CAN identifier 160.

In the following, reference is made to several value ranges 198-206. Each of the value ranges 192-206 may be considered as a value sub-range of the total value range 196. The value ranges 198-206 may not overlap. The designation of the respective value ranges 198-206, such as the first value range 198 or the second value range 200, is intended solely to distinguish the value ranges 198-206. For example, the term "first" of the first value range 198 is used solely to refer to this value range 198. In an example, the first value range 198 is not located at the lower limit of the total value range 196 or at the upper limit of the total value range 196.

In an example, the total value range 196 is divided into a plurality of value ranges 198-206. For example, the total value range 196 may be divided into at least three, four, or five value ranges 198-206. In the example from Figure 5, the total value range 196 is divided into exactly five value ranges 198-206. The fifth value range 206 represents the smallest value or several smallest values that can be represented by a CAN identifier 160. For example, the fifth value range 206 may include the value zero. The fifth value range 206 may comprise values from 0 to 47. In an example, the second value range 200, the third value range 202, the first value range 198, and the fourth value range 204 follow the fifth value range 206 in the order mentioned. As an effect, the following sequence of value ranges 198-206 may be provided in an example: fifth value range 206, second value range 200, third value range 202, first value range 198, fourth value range 204. The values of the total value range 196 may be distributed continuously over the sequence of value ranges 198-206. Each value of the total value range 196 can be assigned to exactly one of the value ranges 198-206. In this example, the value 0 (zero) is assigned to the fifth value range 206 and the value 2047 can be assigned to the fourth value range 204.

In an example, the values of the total value range 196 may be distributed as follows:
Values of the fourth value range 204: 2000 to 2047
Values of the first value range 198: 1920 to 1999
Values of the third value range 202: 129 to 1919
Values of the second value range 200: 48 to 128
Values of the fifth value range 206: 0 to 47

The fifth value range 206 comprises the smallest values, which at the same time represent the highest priorities. If an identifier 160 of a CAN frame 154 represents a value from the fifth value range 206, then this CAN frame 154 has a very high priority during arbitration and therefore a very good chance of being transmitted with a particularly low delay. The corresponding priorities may also be referred to as emergency priorities.

The fourth range of values 204 comprises the largest values, which at the same time may represent the lowest priorities. If an identifier 160 of a CAN frame 154 represents a value from the fourth value range 204, then this CAN frame 154 has a very low priority during arbitration and therefore a very small chance of being transmitted with a low time delay. In fact, it is likely to be expected that the transmission of the CAN frame will be delayed due to the low priority.

The third value range 202 comprises values which at the same time may represent priorities that are neither very high nor very low. The values comprised by the third value range 202 may represent, for example, so-called "regular" priorities.

The second value range 200 comprises values which represent priorities that are, for example, higher than the regular priorities and lower than the high priorities (emergency priorities). If an identifier 160 of a CAN frame 154 represents a value from the second range of values 200, then this CAN frame 154 has a priority during arbitration that is higher than any regular priority. As a result, the CAN frame 154 wins during arbitration against other CAN frames 154 with regular priority.

The first range 198 comprises values which present priorities that are, for example, greater than the lowest priorities and less than the regular priorities. If an identifier 160 of a CAN frame 154 represents a value from the first value range 198, then this CAN frame 154 has a priority during arbitration that is lower than any regular priority. As a result, a corresponding CAN frame 154 will lose against other CAN frames with regular priority during arbitration.

As explained above, the distribution of the values of the total value range 196 can also be performed differently and/or may result in a different number of value ranges 198-206. In addition, the upper and lower limits of the respective value ranges 198-206 may also be predefined differently than shown for the example explained above.

In an example, the total range of values 196 may be divided into at least three value ranges 200-204, so that at least a first value range 198, a second value range 204, and a third value range 202 are provided.

As explained above, the processing unit 110 of the CAN device 180 is configured to create the frame series 184 based on the first data 182 such that the frame series 184 comprises the start CAN frame 186 and at least one further follower CAN frame 188-192. The processing unit 110 may be configured to distribute the first data 182 in equal proportions among the CAN frames 186, 188-192 of the frame series 184. In another example, the first data 182 may be distributed unevenly.

The processing unit 110 of the CAN device 180 is configured to create the start CAN frame 186 of the frame series 184 such that the start CAN frame 186 comprises an identifier 160 that represents a value, referred to as the start value, of the first predefined value range 198.

The processing unit 110 of the CAN device 180 is further configured to create each follower CAN frame 188-192 of the frame series 184 such that each follower CAN frame 188-192 comprises a respective identifier 160 which represents a value, referred to as the follower value, of the second predefined range of values 200.

The CAN device 180 is configured to transmit the CAN frames 186, 188-192 of the frame series 184 via the second interface such that the at least one follower CAN frame 188-192 or the several follower CAN frames 188-192 follows the start CAN frame 186.

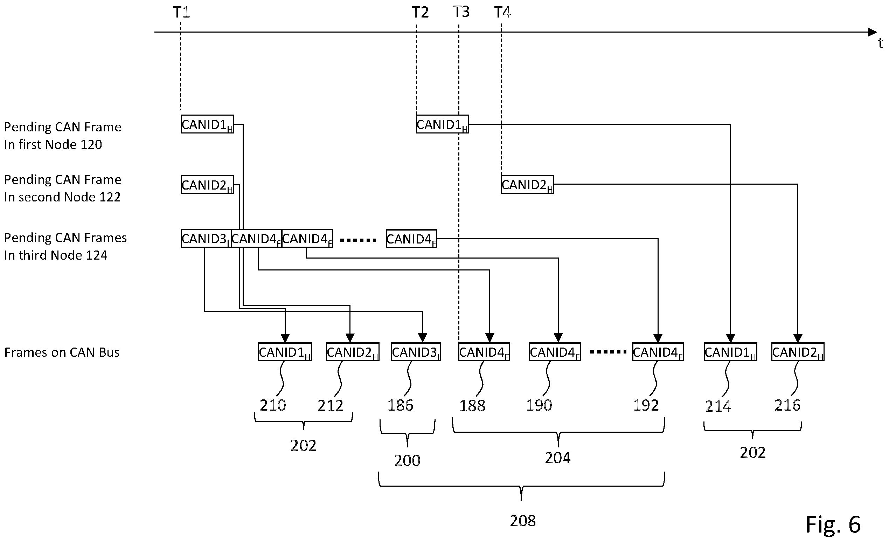

Figure 6 schematically shows an example of a time chart. The time t is plotted on a horizontal axis. At a point in time T1, it is assumed in an example that a CAN frame 210, referred to as the second CAN frame 210, is pending in the first CAN node 120 (see Figure 1) to be transmitted over the CAN bus 104. At time T1, in this example, it is further assumed that another CAN frame 212, which may also be referred to as another, second CAN frame 212, is pending in the second CAN node 122 to be transmitted over the CAN bus 104. The third CAN node 124 may comprise the CAN device 180. The CAN device 180 of the third CAN node 124 may have received first data 182, wherein the processing unit 110 has distributed the first data 182 into a first start CAN frame 186 and three follower CAN frames 188, 190, 192. At time T1 in this example, it is also assumed that the third CAN node 124 is ready for arbitration and subsequent transmission of the start CAN frame 186 over the CAN bus 104. The follower CAN frames 188-192 may be in the same queue as the start CAN frame 188 of the third CAN node 124. Thus, it may be assumed that the third CAN node 124 is also ready for arbitration and subsequent transmission of the three follower CAN frames 188-190 once the start CAN frame 186 has been transmitted.

In the example, it may also be assumed that the identifier 160 of the second CAN frame 210 represents a smaller value (and thus a higher priority) than the identifier 160 of the other second CAN frame 212. If the first node 120, the second node 122 and the third node 124 perform arbitration at time T1 (or immediately thereafter), then the second CAN frame 210, which is pending for transmission in the first node 120, will win. As an effect, the first node 120 will transmit the second CAN frame 210 over the CAN bus 104 before the other second CAN frame 212 and also before the start CAN frame 186.

After the transmission of the second CAN frame 210, arbitration begins again, in which the other second CAN frame 212 wins over the start CAN frame 186, so that the second CAN node 122 will transmit the other second CAN frame 212 over the CAN bus 104, while the third CAN node 124 waits for the transmission of the start CAN frame 186.

After the other second CAN frame 212 has been transmitted, the third CAN node 124 may begin transmitting the start CAN frame 186, assuming in particular that no other node 120, 122 wants to transmit another CAN frame 154 with higher priority.

It was explained earlier that the third CAN node 124 may comprise the CAN device 180. The third CAN node 124 may be controlled by the CAN device 180 such that the transmission of the follower CAN frames 188-192 is performed one after the other directly after the transmission of the start CAN frame 186.

The transmission of the first one of the follower CAN frames 188 via the CAN bus 104 is performed at time T3. As can be seen in an example in Figure 6, a further second CAN frame 214 has been pending in the first CAN node 120 since time T2 to be transmitted via the CAN bus 104. Each of the second CAN frames 210, 212, 214, 216 comprises an identifier 160 that represents a value from the third value range 202. Each follower CAN frame (188, 190, 192) comprises an identifier 160 that represents a value from the second value range 200. The second value range 200 is smaller than the third value range 202. The value ranges 198-206 or 198-202 may be comprised of directly consecutive values, while the value ranges 198-206 or 198-202 are not overlapping. As an effect, any value from the second value range 200 is smaller than any value from the third value range 202. As a further effect, each follower CAN frame 188, 190, 192 will win during an arbitration against any second CAN frame 210, 212, 214, 216, in particular against the second CAN frame 214. Given this principle, the third CAN node 124 will transmit one follower CAN frame 188-192 directly after the other resulting in an uninterrupted series of CAN frame transmissions. Only in emergency cases, the series may be interrupted by an CAN frame having an emergency priority. As an effect, via the CAN device 180 and in particular due to the configuration of the processing unit 110 for creating the follower CAN frames 188-192, it may be enabled that the follower CAN frames 188-192 can be transmitted directly subsequent to the start CAN frame 186 and successively via the CAN bus 104. As an even further effect, transmission of CAN frames 186, 188-192 of frame series 184 over CAN bus 104 may be prevented from being interrupted by a second CAN frame 210-216. As shown schematically in an example in Figure 6, the first CAN node 120 in the example explained above will have to wait until the last follower CAN frame 192 of the frame series 184 has been transmitted in order to be able to start transmitting the second CAN frame 192 via the CAN bus 104 directly following the arbitration. Thereupon, a further second CAN frame 216 may be transmitted by the second CAN node 122 via the CAN bus 104, which has been pending for transmission in particular since time T4. The priority of the second CAN frame 214 represented by its identifier 160 may be higher than the priority represented by the identifier 160 of the other second CAN frame 216.

The example explained above has shown that via the CAN device 180 and the associated processing unit 110, the CAN frames 186, 188-192 of a frame series 184 may be transmitted one after the other, in particular over a CAN bus 104, without the transmission being interrupted by another CAN frame, in particular a second CAN frame 210-216. In an example, only CAN frames having an emergency identifier may interrupt the transmission. As an effect, a virtual coupling 208 of the CAN frames 186, 188-192 of the frame series 184 may be achieved, which is likely not broken up during transmission over the CAN bus 104.

An example of the CAN device 180 is shown in Figure 2. In the first embodiment of the CAN device 180, the CAN device 180 comprises as the second interface the TXD interface 130 of the CAN controller 108. In this example, the CAN device 180 may comprise the first interface 146, the processing unit 110, and the CAN controller 108. The CAN controller 108 may be implemented by the processing unit 110. The processing unit 110 of the CAN device 180 may be configured to control the CAN controller 108 so that the CAN controller 108 transmits the CAN frames 186, 188-192 of the frame series 184 via the TXD interface 130 such that the at least one follower CAN frame 188-192 follows the start CAN frame 186. The TXD interface 130 of the CAN controller 108 may also be referred to as the first TXD interface 130. The first TXD interface 130 of the CAN controller 108 may be coupled to the second TXD interface 132 of the CAN transceiver 106 via the first signal connection 134. The CAN transceiver 106 may be configured to receive the CAN frames 186, 188-192 of the frame series 184 via the second TXD interface 132. The CAN transceiver 106 may be configured to create a differential voltage signal, also referred to as a bus signal, at the bus interface 144 so that the bus signal represents the CAN frames 186, 188-192 of the frame series 184. The electrical voltage of the bus signal may be provided between the third and fourth signal connections 148, 150, so that a corresponding electrical voltage of the bus signal is created between the first and second CAN bus lines 112, 114. The bus signal may thus be transmitted over the CAN bus 104. The bus signal may represent the CAN frames 186, 188-192 of the frame series 184.

A further example of the CAN device 180 is shown in Figure 2, too. In the second embodiment of the CAN device 180, the CAN device comprises as the second interface the CAN BUS interface 144 of the CAN transceiver 106. In an example, the CAN device 180 may comprise the first interface 146, the processing unit 110, the CAN controller 108, and the CAN transceiver 106. The CAN controller 108 may be implemented by the processing unit 110. Furthermore, the CAN device 180 may comprise the signal connection 134, 140. In an example, the CAN device 180 is a CAN node 102. In this case, the CAN node 102 may also be referred to as the CAN device 180, or vice versa. The above-described advantageous features, technical effects and advantages as explained in connection with the first embodiment of the CAN device 180 are also valid for the second embodiment of the CAN device 180 in an analogous manner.

The following explanations may be valid for either of the two embodiments of the CAN device 180.

In an example, the CAN device 180, in particular the associated processing unit 110, may be configured to use the second value range 200 exclusively for a follower value. A follower value is a value represented by an identifier 160 of a follower CAN frame 188-192. As an effect, it can be prevented that an identifier 160 of a second CAN frame 210-216 represents a value from the second value range 200. As a further effect, it can be achieved that a group of follower CAN frames 188-192 may directly follow a start CAN frame 186 for transmission via the CAN bus 104. When and with which priority the transmission of CAN frames 186, 188-192 of the frame series 184 is performed may likely depend solely on the priority represented by the value of the identifier 160 of the start CAN frame 186. If the start CAN frame 186 wins arbitration, transmission of the start CAN frame 186 and the directly following transmission of the follower CAN frames 188-192 may be ensured.

In an example, the processing unit 110 of the CAN device 180 is configured to create each follower CAN frame 188-192 of the frame series 184 such that the identifier 160 of each follower CAN frame 188-192 represents the same follower value. As an effect, it may be achieved with high probability that all follower CAN frames 188-192 can be transmitted directly one after the other via the CAN bus 104. The order of transmission of the follower CAN frames 188-192 may be controlled by the processing unit 110 and/or the CAN controller 108. As an effect two series of frames may not overlap in time.

An example of a CAN system 100 is schematically illustrated in Figure 1. The CAN system 100 comprises a plurality of CAN nodes 102. In the example of Figure 1, the CAN system 100 may comprise a first CAN node 120, a second CAN node 122, a third CAN node 124, and a fourth CAN node 126. Each of the CAN nodes 120-126 may comprise a CAN device 180 or be formed by the CAN device 180.

In connection with Figure 6, an example was explained in which the third CAN node 124 receives first data 182 via the first interface 146. In an example, the first data 182 may be characterized by its amount of data being more than a maximum amount of payload data of the data field 164 of a single CAN frame 154. The first data may be distributed, in particular fragmented, by the processing unit 110 of the CAN device 180 of the third node 124 among the CAN frames 186, 188-192 of the frame series 184.

In an example, the first CAN node 120 may receive second data via the associated first interface 146 of the associated CAN device 180. The second data may be different to the first data 182 in an example by the fact that the amount of data of the second data is less than or equal to the maximum amount of payload data of the data field 164 of a single CAN frame 154. As an effect, the second data may be received and/or embedded in the data field 168 of a single second frame 210. This may prevent the second data from being split across multiple CAN frames 154.

Examples were previously explained in connection with CAN nodes 120-126, wherein first data 182 was received by the third CAN node 124 and second data was received by the first CAN node 120. These examples are not meant to be restrictive. Each of the CAN nodes 120-126 may be configured identically. As an effect, each of the CAN nodes 120-126 may receive first data and/or second data. The following explanations may therefore be understood generally with reference to a CAN device 180.

**In** an example, the CAN device 180 is configured to receive second data in particular via the first interface 146. The processing unit 110 of the CAN device 180 may be configured to create a second CAN frame 210-216 based on the second data such that the second data is entirely represented and/or embedded by the second CAN frame 210-216. The processing unit 110 of the CAN device 180 may also be configured to create the second CAN frame 210-216 such that the second CAN frame 210-216 comprises an identifier 160 that represents a value of the third range of values 202. As previously mentioned, the third value range 202 may be smaller than the first value range 198 and larger than the second value range 200. The third value range 202 may be between the first value range 198 and the second value range 202. As an effect, the second CAN frame 210-216 will win in an arbitration against a start CAN frame 186. As a further effect, the second CAN frame 210-216 will lose arbitration against a follower CAN frame 188-192. As yet another effect, the second CAN frame 210-216 will not interrupt the transmission of a group of CAN frames 186, 188-192 of a frame series 184, but wait until the complete transmission of the group of CAN frames 186, 188-192 in the frame series 184, in order to possibly win in the subsequent arbitration.

In connection with Figure 5, an example was given above that the total range of values 196 may be divided into a plurality of value ranges 198-206. For example, the plurality of value ranges may comprise the first value range 198, the second value range 200, and the third value range 202. In an example, a fourth value range 204 may be comprised by the plurality of the value ranges. In an example, a third CAN frame may comprise an identifier having a value of the third value range 202. The third value range 202 may be larger than the first value range 198. This may be understood that the third value range 202 contains values that are each larger than any value of the first value range 198. As an effect, the fourth value range comprises values that represent priorities that are each smaller than a priority represented by an identifier 160 of a start CAN frame 186, because the value of an identifier 160 of a start CAN frame 186 corresponds to a value from the first value range 186. As an effect, the identifier 160 of a start CAN frame 186 represents a higher priority than the identifier 160 of a third CAN frame.

In an example, the CAN device 180 is configured to receive third data via the first interface 146. The processing unit 110 of the CAN device 180 may be configured to create a third CAN frame based on the third data such that the third data is entirely represented and/or embedded by the data field 168 of the third CAN frame. The processing unit 110 may also be configured to create the third CAN frame such that the third CAN frame comprises an identifier 160 having a value of a fourth value range of 204. The fourth value range 204 is larger than the first value range 198. This may be understood that each value of the fourth value range 204 is larger than any value of the first value range 198.

As an effect, values for identifiers 160 of third CAN frames, which represents only a low priority, may be taken from the fourth value range 204. In an arbitration, a start CAN frame 186 will win against a third CAN frame. The follower CAN frames 188-192 will also win arbitration against the third CAN frame. As an effect, a series of frames 184 can be transmitted without delay and/or interruption even if at least one third CAN frame is expected for transmission in one of the other CAN nodes 120-126.

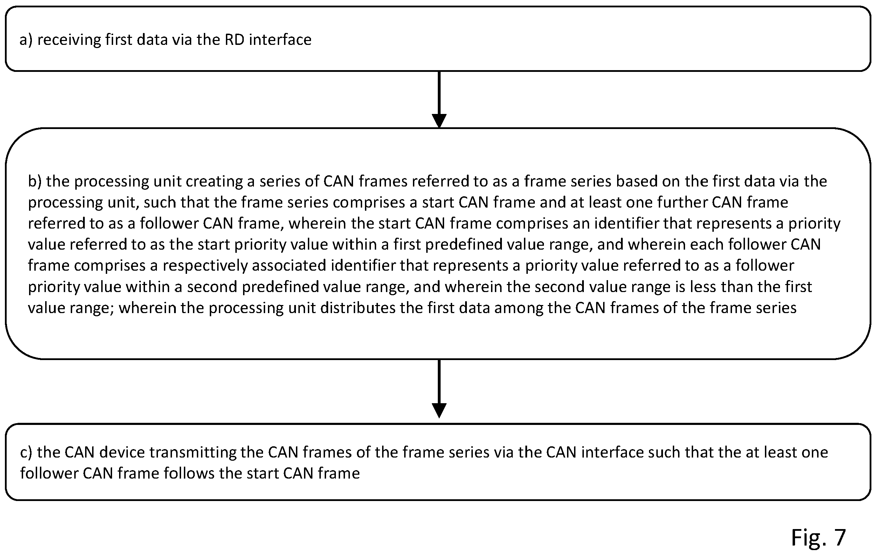

Figure 7 schematically shows an example of a method for the CAN device 180. The method comprises the steps:
a) receiving first data via the RD interface;
b) the processing unit creating a series of CAN frames referred to as a frame series based on the first data via the processing unit, such that the frame series comprises a start CAN frame and at least one further CAN frame referred to as a follower CAN frame, wherein the start CAN frame comprises an identifier that represents a priority value referred to as the start priority value within a first predefined value range, and wherein each follower CAN frame comprises a respectively associated identifier that represents a priority value referred to as a follower priority value within a second predefined value range, and wherein the second value range is less than the first value range; wherein the processing unit distributes the first data among the CAN frames of the frame series, and
c) the CAN device transmitting the CAN frames of the frame series via the CAN interface such that the at least one follower CAN frame follows the start CAN frame.

For the method, reference is made to the previous explanations, advantageous features, technical effects and advantages in an analogous manner as they have been explained in connection with the CAN device 180 and/or the CAN system 100.

Although the described exemplary embodiments disclosed herein focus on devices, systems, and methods for using same, the present disclosure is not necessarily limited to the example embodiments illustrate herein.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium. More specific examples (non-exhaustive list) of the computer-readable medium may include the following: an electrical connection having one or more wires, a portable computer diskette, a random-access memory (RAM), a read-only memory (ROM), an erasable programmable read-only memory (EPROM or Flash memory), an optical fiber, a portable compact disc read-only memory (CDROM), a digital versatile disc (DVD), a Blu-ray disc (BD), and a memory card.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. **In** the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

Unless stated otherwise, terms such as "first" and "second" are used to arbitrarily distinguish between the elements such terms describe. Thus, these terms are not necessarily intended to indicate temporal or other prioritization of such elements.

## Claims

1. Controller Area Network, CAN, device comprising:
a data, RD, interface,
a processing unit, and
a bus interface for coupling to a CAN bus,
wherein the CAN device is configured to receive first data via the RD interface,
wherein the processing unit is configured to create a series of CAN frames referred to as a frame series based on the first data such that the frame series comprises a start CAN frame and at least one further CAN frame referred to as at least one follower CAN frame,
wherein the processing unit is configured to distribute the first data among the CAN frames of the frame series,
wherein the processing unit is configured to create the start CAN frame such that the start CAN frame comprises an identifier that represents a priority value referred to as the start priority value within a predefined first value range,
wherein the processing unit is configured to create each follower CAN frame such that each follower CAN frame comprises a respectively associated identifier that represents a priority value referred to as a follower priority value within a predefined second value range,
wherein the second value range is less than the first value range, and
wherein the CAN device is configured to transmit the CAN frames of the frame series via the CAN interface such that the at least one follower CAN frame follows the start CAN frame.

2. The CAN device according to the preceding claim, wherein the CAN device is configured to use the second value range for follower priority values only.

3. The CAN device according to any of the preceding claims, wherein the amount of data of the first data is greater than a maximum amount of payload data of a single CAN frame.

4. The CAN device according to any of the preceding claims, wherein the processing unit is configured to distribute the first data among the payload fields of the CAN frames of the frame series.

5. The CAN device according to any of the preceding claims, wherein the processing unit is configured to determine the number of follower CAN frames of the frame series based on the first data.

6. The CAN device according to any of the preceding claims, wherein the processing unit is configured to create each follower CAN frame of the frame series such that the identifier of each follower CAN frame represents the same follower priority value.

7. The CAN device according to any of the preceding claims, wherein the CAN device is configured to receive second data, wherein the processing unit is configured to create a second CAN frame based on the second data such that the second data is entirely represented by the second CAN frame and such that the second CAN frame comprises an identifier representing a priority value within a predefined third value range, and wherein the third value range is greater than the second value range.

8. The CAN device according to the preceding claim, wherein the third value range is less than the first value range.

9. The CAN device according to any of the preceding claims, wherein the CAN device is configured to receive third data, wherein the processing unit is configured to create a third CAN frame based on the third data such that the third data is entirely represented by the third CAN frame and such that the third CAN frame comprises an identifier representing a priority value within a predefined fourth value range, and wherein the fourth value range is greater than the first value range.

10. The CAN device according to any of the preceding claims, wherein the CAN device comprises a CAN controller and a CAN transceiver, wherein the bus interface is formed by the CAN transceiver.

11. The CAN device according to the preceding claim, wherein the CAN controller is formed by the processing unit.

12. The CAN device according to any of the preceding claims 10 to 11, wherein the CAN device comprises a data adaptation unit formed by the processing unit, wherein the data adaptation unit is coupled to the CAN controller, and wherein the data adaptation unit is configured to distribute received data among a plurality of CAN frames and/or to adapt identifier of CAN frames based on received data.

13. A CAN system comprising:
a plurality of CAN devices according to any of the preceding claims, and
a CAN bus,
wherein each CAN device is coupled to the CAN bus.

14. A method for a controller area network, CAN, device, wherein the CAN device comprises a data, RD, interface, a processing unit, and a bus interface for coupling to a CAN bus, the method comprising the steps of:
a) receiving first data via the RD interface;
b) the processing unit creating a series of CAN frames referred to as a frame series based on the first data via the processing unit, such that the frame series comprises a start CAN frame and at least one further CAN frame referred to as a follower CAN frame, wherein the start CAN frame comprises an identifier that represents a priority value referred to as the start priority value within a first predefined value range, and wherein each follower CAN frame comprises a respectively associated identifier that represents a priority value referred to as a follower priority value within a second predefined value range, and wherein the second value range is less than the first value range; wherein the processing unit distributes the first data among the CAN frames of the frame series, and
c) the CAN device transmitting the CAN frames of the frame series via the CAN interface such that the at least one follower CAN frame follows the start CAN frame.

15. The method of the preceding claim, wherein the method also comprising the following steps:
d) receiving second data via the RD interface, and
e) the processing unit creating a second CAN frame based on the second data such that the second data is entirely represented by the second CAN frame and such that the second CAN frame comprises an identifier representing a priority value of a predefined third value range, and wherein the third value range is greater than the second value range.
